# EUROPÄISCHE PATENTANMELDUNG

(11) **EP 2 570 642 A2**
(43) Veröffentlichungstag der Anmeldung: **20.03.2013**
(21) Anmeldenummer: 12184419.5
(22) Anmeldetag: 14.09.2012
(51) Int. Cl.: F02K 9/60

(54) **Thermalisolation für Raketentriebwerke**

(30) Priorität: 15.09.2011 DE 102011113539
(71) Anmelder: Bayern-Chemie Gesellschaft für flugchemische Antriebe mbH, 84544 Aschau a. Inn (DE)
(72) Erfinder: Meier, Michael, 84559 Kraiburg am Inn (DE); Bauer, Karl, 83564 Soyen (DE)
(74) Vertreter: von Puttkamer · Berngruber

(57) **Zusammenfassung**

Die Thermalisolation (8) für eine Triebwerkskomponente, z.B. die Schubdüse (3) eines Raketentriebwerks (1) wird durch ein Faserverbundmaterial gebildet, welches aus Wicklungen (10, 12, 12, ....) besteht, deren Wickelachse mit der Längsachse (15) der mit der Thermalisolation (8) versehenen Triebwerkskomponente (3) zusammenfällt. Die Wicklungen (10, 11, 12, ...) bestehen aus einem Schnurgeflecht (13) und sind entlang der Wickelachse verpresst.

## Beschreibung

Die Erfindung bezieht sich auf eine Thermalisolation für Raketentriebwerke nach dem Oberbegriff des Anspruchs 1. Sie hat auch ein Verfahren zur Herstellung der Thermalisolation zum Gegenstand.

Über die Einsatzdauer eines mit einem Feststoffraketentriebwerk ausgerüsteten Flugkörpers sind die Triebwerkskomponenten, insbesondere Brennkammer und Schubdüse, einer hohen thermischen sowie erosiven Belastung ausgesetzt. Aus diesem Grund müssen die tragenden Strukturen der Triebwerkskomponenten mit wirkungsvollen, auf den Einsatzweck optimierten Isolationsmaterialien ausgekleidet werden. In der Feststoffraketentechnik werden thermisch hoch beanspruchte Triebwerkskomponenten in der Regel passiv, d.h. von einer ablativ wirkenden Wärmeisolation gekühlt. So sind phenolharzgebundene Stoffe als Ablationsmaterialen geeignet. Sie besitzen gute Wärmebeständigkeit in hohen Temperaturbereichen und Widerstandsfähigkeit gegen erodierende Angriffe. Für diese hohen Anforderungen haben sich besonders Thermalisolationen aus Faserverbundmaterial, beispielsweise aus Quarzfasern mit Phenolharz als Matrix bewährt.

Bei Thermalisolationen, die beispielsweise in der Schubdüse hohen Gasströmungen ausgesetzt sind, hängt die Standfestigkeit wesentlich davon ab, dass die Fasern möglichst senkrecht zur belasteten Oberfläche ausgerichtet sind. Dazu ist es bekannt, ein speziell gefertigtes, flaches, imprägniertes Gewebeband, dessen Schussfäden senkrecht zur Bandlängsrichtung verlaufen, auf einen Dorn zu wickeln, zu verpressen und auszuhärten. Es erfordert jedoch einen erheblichen Aufwand, um das flache Gewebeband hochkant auf dem Dorn auszurichten, dass die Schussfäden des Gewebebandes möglichst senkrecht zur belasteten Oberfläche verlaufen.

Aufgabe der Erfindung ist es, eine aus Faserverbundmaterial auf einfache Weise herstellbare Thermalisolation hoher Standfestigkeit für Raketentriebwerke zur Verfügung zu stellen.

Dies wird erfindungsgemäß mit der im Anspruch 1 gekennzeichneten Thermalisolation erreicht. In den Ansprüchen 2 bis 9 sind vorteilhafte Ausgestaltungen der Erfindung wiedergegeben. Im Anspruch 10 ist ein vorteilhaftes Verfahren zur Herstellung der Thermalisolation gekennzeichnet.

Nach der Erfindung wird die Thermalisolation aus Wicklungen aus einem Faserverbundmaterial, also Verstärkungsfasern, die in einer Matrix eingebettet sind, gebildet. Die Wicklungen bestehen aus einem Schnurgeflecht, das entlang der Wickelachse verpresst wird.

Die Wickelachse fällt mit der Längsachse oder Rotationsachse der jeweiligen mit der Thermalisolation zu versehenden Triebwerkskomponente zusammen, die Wicklungen verlaufen also koaxial zur Längs- oder Rotationsachse der Triebwerkskomponente, also z.B. der Schubdüse oder Brennkammer.

Das Schnurgeflecht, das mit einer Flechtmaschine hergestellt wird, ist im Handel erhältlich. Das Schnurgeflecht lässt sich gut wickeln. Nach dem Verpressen des Schnurgeflechts wird ein Faserverlauf erhalten, der der Thermalisolation eine hohe Erosionsfestigkeit verleiht.

Das Schnurgeflecht kann aus einem einzigen Fasermaterial, also beispielsweise nur Glasfasern, Kohlefasern oder Aramidfasern bestehen, es kann jedoch auch aus unterschiedlichen Fasermaterialien zusammengesetzt sein. Vorzugsweise besteht das Schnurgeflecht aus mindestens 10 Gew.-%, insbesondere mindestens 20 Gew.-% Glasfasern und/oder Kohlefasern. Der Gehalt des jeweiligen Fasermaterials kann durch die Anzahl der Fäden, also Spulen der Flechtmaschine und/oder die Dicke des Fadens des jeweiligen Fasermaterials eingestellt werden.

Dabei verlaufen die Fäden und damit die Verstärkungsfasern der Wicklungen des verpressten Schnurgeflechts vorzugsweise möglichst radial zur Wickelachse, d.h. die Fäden an den radialen Außenseiten der Wicklungen des Schnurgeflechts schließen mit dem zur Wickelachse senkrecht verlaufenden Radius einen Winkel von vorzugsweise weniger als 60°, insbesondere weniger als 45°, ganz besonders bevorzugt weniger als 30° im Durchschnitt ein. Diesen Winkel weisen die Fasern damit auch zur Senkrechten der belasteten Oberfläche der tragenden Struktur der Triebwerkskomponente, also insbesondere zu der Senkrechten der tragenden Außenstruktur der Schubdüse oder der Brennkammer auf.

Durch diesen im wesentlichen senkrecht auf die belastete Oberfläche ausgerichteten Verlauf der Fasern der Wicklungen des Faserverbundmaterials wird ein möglichst geringer Erosionsabtrag durch die hohe Strömungsgeschwindigkeit der heißen Verbrennungsgase und Partikel des Raketentriebwerks sichergestellt, die insbesondere in der Schubdüse auftritt.

Bei einem konischen Abschnitt der Raketentriebwerkskomponente, beispielsweise der Schubdüse, kann die erfindungsgemäße gewickelte Thermalisolation eine entsprechende konische Innen- und Außenkontur aufweisen.

Der Anteil der Matrix des Faserverbundmaterials der erfindungsgemäßen Thermalisolation beträgt vorzugsweise 5 bis 50 Gew.-%, insbesondere 20 bis 30 Gew.-%, der Anteil der Verstärkungsfasern vorzugsweise mindestens 50 Gew.-%, insbesondere mindestens 70 Gew.-%.

Die Matrix wird vorzugsweise durch ein Harz und/oder ein Elastomere gebildet. Das Harz kann Phenolharz sein, das Elastomere beispielsweise Nitrilbutadien-Kautschuk (NBR) oder ChloroprenKautschuk. Während die Matrix in erster Linie die thermische Isolationswirkung übernimmt, schützen die Verstärkungsfasern die Thermalisolation des Raketentriebwerks in erster Linie vor Erosion. Zur Herstellung der erfindungsgemäßen Thermalisolation wird das mit einer aushärtbaren Matrix beispielsweise mit flüssigem Harz und/oder flüssigem Elastomeren getränkte Schlauchgeflecht auf einen Dorn aufgewickelt. Der Außendurchmesser des Dorns ist dabei so bemessen, dass, wenn der Dorn koaxial in der mit der Thermalisolation zu versehenden tragenden Außenstruktur der Raketentriebwerkskomponente, also beispielsweise der Schubdüse angeordnet wird, zwischen dem Dorn und dem Innendurchmesser der Außenstruktur ein Ringspalt gebildet wird, welcher der gewünschten Schichtdicke der Thermalisolation entspricht.

Anschließend werden die Wicklungen des Schlauchgeflechts in diesem Ringspalt entlang der Wickelachse auf dem Dorn verpresst. Nach dem Aushärten der flüssigen Matrix, also beispielsweise des flüssigen Harzes und/oder flüssigen Elastomeren wird der Dorn aus der tragenden Außenstruktur gezogen, wodurch die tragende Außenstruktur und damit die Raketentriebwerkskomponente mit der Thermalisolation versehen ist. Auf diese Weise kann eine zylindrische Außenstruktur oder eine sich verjüngende und/oder erweiternde Außenstruktur mit einer Thermalisolation versehen werden.

Die erfindungsgemäße Thermalisolation ist zwar in erster Linie für Feststoffraketentriebwerke bestimmt, jedoch auch für andere Raketentriebwerke einsetzbar, z.B. für Gel- oder Flüssigtriebwerke.

Nachstehend ist die Erfindung anhand der beigefügten Zeichnung beispielhaft näher erläutert. Darin zeigen:
Figur 1 einen Schnitt durch die Schubdüse und die als Sterninnenbrenner ausgebildete Brennkammer eines Feststoffraketentriebwerks;
Figur 2 eine perspektivische Ansicht des Schnurgeflechts, aus dem die Thermalisolation der Brennkammer nach Figur 1 und 3 hergestellt wird;
Figur 3 eine perspektivische Ansicht der Thermalisolation im zylindrischen Bereich der Brennkammer des Raketentriebwerks nach Figur 1 mit teilweise weggebrochener Außenstruktur; und
Figur 4 einen vergrößerten Ausschnitt der Figur 3.

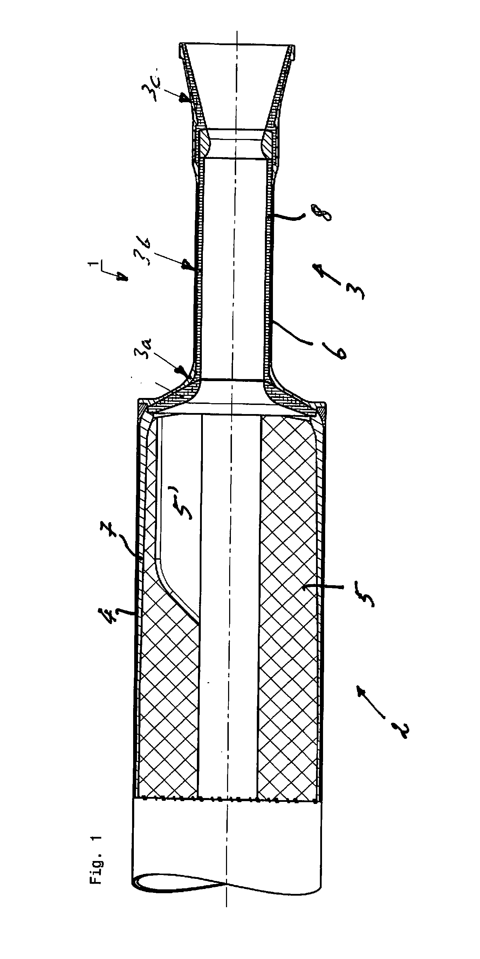

Gemäß Figur 1 weist das Feststoffraketentriebwerk eine Brennkammer 2 und eine Schubdüse 3 auf. In der tragenden Struktur oder Hülle 4 der Brennkammer 2 ist der Festtreibstoff 5 angeordnet, der als Sterninnenbrenner ausgebildet ist, wie durch die Aussparung 5' veranschaulicht. Entsprechend der tragenden Struktur 6 weist die Schubdüse 3 brennkammerseitig einen sich in Gasströmungsrichtung konisch verjüngenden Abschnitt 3a, einen zylindrischen Abschnitt 3b und einen sich konisch erweiterten Abschnitt 3c auf.

Zwischen der Hülle 4 und dem Festtreibstoff 5 ist in der Brennkammer 2 eine Thermalisolation 7 vorgesehen. Die tragende Struktur 6 der Düse 3 ist an der Innenseite mit einer Thermalisolation 8 versehen, welche einer hohen thermischen und erosiven Belastung ausgesetzt ist.

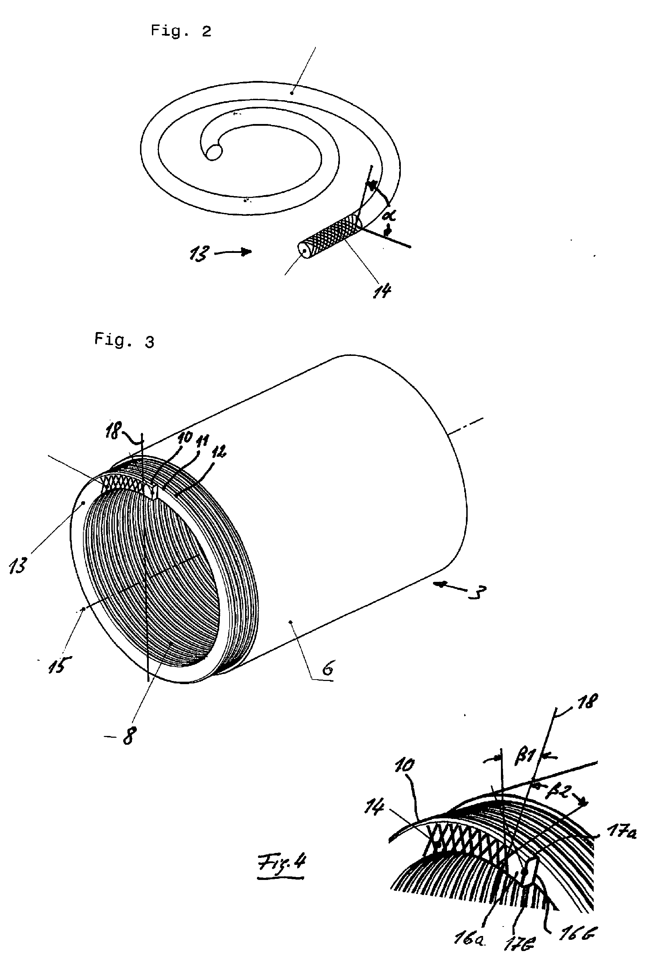

Die Thermalisolation 8 besteht gemäß Figur 3 aus Wicklungen 10, 11, 12...., welche aus dem in Figur 2 dargestellten Schnurgeflecht 13 gebildet sind. Das Schnurgeflecht 13 weist danach einen runden Querschnitt auf und ist schlauchförmig, also ohne Seele, d.h. innen hohl ausgebildet.

Der Flechtwinkel α des Schnurgeflechts, also der Winkel zwischen den sich kreuzenden Fäden 14 des Geflechts 13 kann beispielsweise zwischen 60 und 150° betragen. Die Fäden 14 des Schnurgeflechts 13 können beispielsweise aus Glasfasern oder Kohlefasern bestehen. Das Schnurgeflecht 13 ist mit einer aushärtbaren Matrix getränkt.

Die Wicklungen 10, 11, 12.... der Thermalisolation 8 der Schubdüse 3 sind gemäß Figur 3 koaxial zur Längs- oder Rotationsachse 15 der Schubdüse 3 angeordnet. Das heißt, die Wickelachse der Wicklungen 10, 11, 12, ... und die Längs- oder Rotationsachse 15 der Schubdüse 3 fallen zusammen, wenn die aus den Wicklungen 10, 11, 12, .... bestehende Thermalisolation 8 in der Schubdüse 3 angeordnet ist.

Die Wicklungen 10, 11, 12 in der Schubdüse 3, die aus dem schlauchförmigen Schnurgeflecht 13 mit rundem Querschnitt gemäß Figur 2 gebildet sind, sind entlang der Längs- oder Rotationsachse 15 der Schubdüse 3 verpresst.

Wie aus Figur 3 ersichtlich, weisen die Wicklungen 10, 11, 12, .... damit, wie anhand der Wicklung 10 in Figur 3 und 4 gezeigt, einen annähernd rechteckigen Querschnitt auf. Das heißt, die breiten, radial verlaufenden Außenseiten 16a, 16b der verpressten Wicklung 10 und der übrigen Wicklungen 11, 12, ... verlaufen im Wesentlichen parallel zueinander, während die schmalen Umfangsflächen 17a, 17b im Querschnitt konvex ausgebildet sind.

Damit die Thermalisolation 8 eine hohe mechanische Festigkeit, insbesondere gegenüber der erosiven Belastung aufweist, ist eine möglichst radiale Ausrichtung der Fäden 14, also eine Ausrichtung möglichst senkrecht zur belasteten Oberfläche, also zur Oberfläche der tragenden Außenstruktur 6 der Düse 3 erforderlich.

Demgemäß verlaufen die Fäden 14 an den parallelen Außenseiten 16a, 16b der verpressten Wicklungen 10 wie aus Figur 4 ersichtlich, gegenüber dem Radius 18 zu der Wickelachse bzw. Längs- oder Rotationsachse 15 in einem Winkel β1, β2 von beispielsweise ca. 20 bzw. ca. 40°, also im Durchschnitt von beispielsweise ca. 30°.

Um aus den verpressten, z.B. mit flüssigem Kunststoff imprägnierten Wicklungen 10, 11, 12,.... des Schlauchgeflechts 13 eine Thermalisolation 8 aus einem Faserverbundmaterial zu erhalten, wird der flüssige Kunststoff ausgehärtet, um die Matrix des Faserverbundmaterials zu bilden. Dabei werden auch die Hohlräume durch ausgehärteten Kunststoff gefüllt, die durch die im Querschnitt konvexen Umfangsflächen 17a der Wicklungen 10, 11, 12, .... zwischen den Wicklungen 10, 11, 12, .... und der tragenden Struktur 4 gebildet werden.

## Patentansprüche

1. Thermalisolation für ein Raketentriebwerk, welche aus Wicklungen (10, 11, 12,... .) aus einem Faserverbundmaterial gebildet ist, deren Wickelachse mit der Längsachse (15) der mit der Thermalisolation (8) versehenen Triebwerkskomponente zusammenfällt, **dadurch gekennzeichnet, dass** die Wicklungen (10, 11, 12, ....) aus einem Schnurgeflecht (13) gebildet sind und entlang der Wickelachse verpresst sind.

2. Thermalisolation nach Anspruch 1, **dadurch gekennzeichnet, dass** das Schnurgeflecht (13) aus mindestens 10 Gew.-% Glasfasern besteht.

3. Thermalisolation nach Anspruch 1 oder 2, **dadurch gekennzeichnet, dass** das Schnurgeflecht (13) aus mindestens 10 Gew.-% Kohlefasern besteht.

4. Thermalisolation nach einem der vorstehenden Ansprüche, **dadurch gekennzeichnet, dass** das Schnurgeflecht (13) im unverpressten Zustand einen runden Querschnitt aufweist.

5. Thermalisolation nach einem der vorstehenden Ansprüche, **dadurch gekennzeichnet, dass** das Schnurgeflecht (13) ein schlauchförmiges Geflecht ist.

6. Thermalisolation nach einem der vorstehenden Ansprüche, **dadurch gekennzeichnet, dass** die Wicklungen (10, 11, 12) des verpressten Schnurgeflechts (13) im Querschnitt parallel verlaufende radiale Außenseiten (16a, 16b) aufweisen.

7. Thermalisolation nach einem der vorstehenden Ansprüche, **dadurch gekennzeichnet, dass** die Fäden (14) des verpressten Schnurgeflechts im Durchschnitt in einem Winkel (β1, β2) von weniger als 60° gegenüber dem Radius (18) zu der Wickelachse verlaufen.

8. Thermalisolation nach einem der vorstehenden Ansprüche, **dadurch gekennzeichnet, dass** die Matrix des Faserverbundmaterials durch ein Harz gebildet wird.

9. Thermalisolation nach einem der Ansprüche 1 bis 7, **dadurch gekennzeichnet, dass** die Matrix des Verbundmaterials durch ein Elastomer gebildet wird.

10. Verfahren zur Herstellung der Thermalisolation nach einem der vorstehenden Ansprüche, **dadurch gekennzeichnet, dass** das Schnurgeflecht (13) auf einen Dorn aufgewickelt, der Dorn koaxial in der mit der Thermalisolation (8) zu versehenden Triebwerkskomponente angeordnet und das Schnurgeflecht (13) anschließend verpresst wird.
